# EUROPÄISCHE PATENTSCHRIFT

(11) **EP 1 246 741 B1**
(45) Veröffentlichungstag und Bekanntmachung des Hinweises auf die Patenterteilung: **02.11.2005**
(21) Anmeldenummer: 01921142.4
(22) Anmeldetag: 09.02.2001
(51) Int. Cl.: B60R 21/00, B60R 21/01

(54) **VERFAHREN UND VORRICHTUNG ZUR SITZBELEGUNGSERKENNUNG MITTELS VIDEOSENSORIK UND FUSSRAUMSENSORIK**
METHOD AND DEVICE FOR DETECTING SEAT OCCUPANCY BY MEANS OF A VIDEO SENSOR SYSTEM AND FOOT ROOM SENSOR SYSTEM
PROCEDE ET DISPOSITIF DE DETECTION DE L'OCCUPATION D'UN SIEGE AU MOYEN D'UN SYSTEME DETECTEUR VIDEO ET DETECTEUR ESPACE PIEDS

(30) Priorität: 16.02.2000 DE 10007014
(43) Veröffentlichungstag der Anmeldung: 09.10.2002
(73) Patentinhaber: ROBERT BOSCH GMBH, 70442 Stuttgart (DE)
(72) Erfinder: MATTES, Bernhard, 74343 Sachsenheim (DE); LANG, Hans-Peter, 71638 Ludwigsburg (DE); KOCHER, Pascal, 70839 Gerlingen (DE)
(86) Internationale Anmeldenummer: PCT/DE2001/000500
(87) Internationale Veröffentlichungsnummer: WO 2001/060662

(56) Entgegenhaltungen:
- EP-A- 0 952 933
- EP-A- 1 065 097
- DE-A- 19 814 691
- GB-A- 2 301 922
- US-A- 5 983 147

## Beschreibung

### Stand der Technik

Die vorliegende Erfindung betrifft ein Verfahren und eine Vorrichtung zur Sitzbelegungserkennung, wobei mittels einer Videosensorik die Kopfhöhe einer auf dem Beifahrersitz eines Fahrzeugs befindlichen Person erfaßt wird. Eine solche Vorrichtung ist aus der WO 99/25581 bekannt.

Z.B. aus der US 5,983,147 ist es bekannt, daß mit einer Videosensorik, vorzugsweise mit einer Stereokamera, die Szene des Beifahrersitzes aufgenommen wird, und durch Auswertung der aufgenommenen Szene ermittelt wird, ob der Beifahrersitz überhaupt belegt ist, ob sich darauf ein Erwachsener oder ein Kind befindet oder ob ein Gegenstand dort abgelegt ist. Untersuchungen, z.B. durch die NHTSA (National Highway Traffic Safety Administration) in den USA, haben ergeben, daß Kinder, die auf dem Beifahrersitz des Fahrzeugs saßen, durch Auslösen des Beifahrerairbags tödliche Verletzungen erlitten haben. Überhaupt geht von einem auslösenden Airbag eine Verletzungsgefahr für eine Person auf dem Beifahrersitz aus, wenn diese aufgrund ihrer Sitzposition oder ihrer Körpergröße oder durch Vorbeugen unmittelbar vor Eintritt des Unfalls in Richtung des Beifahererairbags einen zu geringen Abstand zu dem Airbag hat. Es gibt Belegungssituationen des Beifahrersitzes, in denen der Beifahrerairbag bei einem Crash erst gar nicht ausgelöst werden sollte. Zu solchen Belegungssituationen gehört z.B. die Ablage von nicht zu schützenden Gegenständen und ein viel zu geringer Abstand eines Insassen gegenüber dem Beifahrerairbag und insbesondere auch, wenn sich ein Kind auf dem Beifahrersitz befindet. Mit der in der US 5,983,147 beschriebenen Videosensorik wird die Belegungsart des Beifahrersitzes erfaßt, also ob sich ein Gegenstand auf dem Beifahrersitz befindet oder darauf eine erwachsene Person oder ein Kind in einem rückwärts gerichteten Kindersitz sitzt. Auch kann mit der bekannten Videosensorik die Kopfhöhe der jeweiligen Person (Erwachsener oder Kind) ermittelt werden.

Der Beifahrerairbag sollte nicht nur bei Kleinkindern in einem rückwärtsgerichteten Kindersitz deaktiviert werden, sondern auch bei etwas älteren Kindern (5- bis 8-jährige), welche in der Regel auf einem auf dem Beifahrersitz aufliegenden Boostersitz sitzen. Durch den Boostersitz erreichen 5- bis 8-jährige Kinder eine Kopfhöhe, die mit einer erwachsenen Person mit geringerer Körpergröße übereinstimmt. Deshalb vermag die Videosensorik auch nicht zwischen einem Kind auf einem Boostersitz, bei dem der Beifahrerairbag deaktiviert werden sollte, und einer erwachsenen Person mit der gleichen Kopfhöhe, bei der der Beifahrerairbag aktiviert bleiben muß, zu unterscheiden. Die NHTSA verlangt von einer Sitzbelegungserkennung, daß sie zwischen einer sogenannten "5%-Frau" und einem Kind (ca. 5-bis 8-jährig) auf einem Boostersitz unterscheiden kann, da bei einer "5%-Frau" der Beifahrerairbag aktiviert bleiben und bei einem Kind auf einem Boostersitz deaktiviert werden soll. Mit "5%-Frau" sind Frauen mit einer Körpergröße von maximal 1,50 m und einem Körpergewicht von maximal 50 kg gemeint. Diese Frauen stellen ca. 5% der gesamten weiblichen Bevölkerung dar.

Sollte für die Sitzbelegungserkennung ein Gewichtssensor vorhanden sein, so ist auch dieser nicht in der Lage, zwischen den beiden Personen, "5%-Frau" und Kind auf Boostersitz, weil beide in die gleiche Gewichtskategorie fallen, zu unterscheiden.

Der Erfindung liegt daher die Aufgabe zugrunde, ein Verfahren und eine Vorrichtung der eingangs genannten Art anzugeben, womit mit möglichst hoher Zuverlässigkeit zwischen einem Erwachsenen von kleiner Körpergröße (Auslösefall) und einem Kind auf einem Boostersitz (Nichtauslösefall) unterschieden werden kann.

### Vorteile der Erfindung

Die genannte Aufgabe wird mit den Merkmalen des Anspruchs 1 bzw. 2 dadurch gelöst, daß neben einer Videosensorik, welche die Kopfhöhe einer auf dem Beifahrersitz eines Fahrzeugs befindlichen Person erfaßt, ein Fußraumsensor vorhanden ist, der ermittelt, ob eine Person mit einem oder beiden Füßen den Boden vor dem Beifahrersitz berührt. Die Person auf dem Beifahrersitz wird dann als Kind eingestuft, bei dem ein Beifahrerairbag zu deaktivieren ist, wenn die Videosensorik eine unterhalb einer vorgegebenen Schwelle liegende Kopfhöhe registriert und gleichzeitig der Fußraumsensor keine Fußberührung auf dem Boden vor dem Beifahrersitz erkennt. Sollte nämlich die Videosensorik eine Kopfhöhe feststellen, welche der eines auf einem Boostersitz befindlichen Kindes entspricht, so kann mittels des Fußraumsensors eindeutig unterschieden werden, ob es sich wirklich um ein Kind auf einem Boostersitz oder vielleicht um eine erwachsene Person von kleiner Körpergröße handelt. Die erwachsene Person wird nämlich in jedem Fall mit einem oder beiden Füßen den Boden vor dem Beifahrersitz berühren, während das Kind auf dem Boostersitz den Boden mit seinen Füßen nicht erreicht. Mit den beiden Sensoren läßt sich also eine eindeutige Unterscheidung zwischen dem Auslösefall "erwachsene Person mit kleiner Körpergröße" und dem Nichtauslösefall "Kind auf Boostersitz" treffen.

Zweckmäßige Weiterbildungen der Erfindung gehen aus den Unteransprüchen hervor. Danach ist der Fußraumsensor vorteilhafterweise ein Drucksensor, der einen auf den Boden vor dem Beifahrersitz ausgeübten Druck erfaßt. Vorzugsweise ist der Fußraumsensor ein Drucksensor, der bei einem auf den Boden vor dem Beifahrersitz ausgeübten Druck das Profil des den Druck ausübenden Gegenstandes erfaßt. Eine Druckprofilerfassung läßt sich vorteilhafterweise dadurch vornehmen, daß der Fußraumsensor aus mehreren einzelnen Drucksensorelementen besteht.

### Zeichnung

Anhand eines in der Zeichnung dargestellten Ausführungsbeispiels wird nachfolgend die Erfindung näher erläutert. Es zeigen:
Figur 1 eine schematische Darstellung eines Beifahrersitzes in einem Fahrzeug mit einer Videosensorik und einem Fußraumsensor und
Figur 2 ein Ablaufdiagramm für eine Sitzbelegungserkennung.

### Beschreibung eines Ausführungsbeispiels

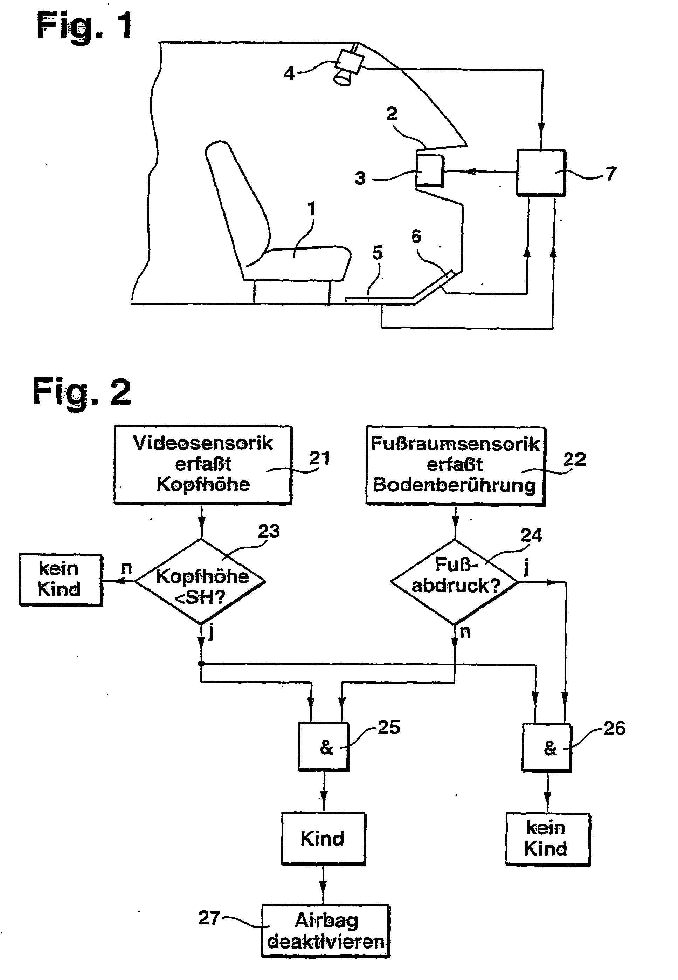

In der Figur 1 ist ein Ausschnitt aus der Fahrgastzelle eines Fahrzeugs dargestellt mit einem Beifahrersitz 1 vor dem Armaturenbrett 2, in dem ein Beifahrerairbag 3 installiert ist. Vorzugsweise am Fahrzeughimmel ist eine Videosensorik 4 angeordnet, welche die Szene auf und um den Beifahrersitz 1 aufnimmt. Die Videosensorik 4 kann eine in bekannter Weise in CCD- oder CMOS-Technik ausgeführte Videokamera sein. Es kann eine Mono- oder eine Stereokamera sein, wobei eine Stereokamera in der Lage ist, ein räumliches Bild aufzunehmen, wodurch verschiedene Belegungsarten des Beifahrersitzes besser differenziert werden können. Auf die genaue Funktionsweise der Videosensorik 4 und der damit verbundenen Bildsignalverarbeitung wird hier nicht näher eingegangen, da sie bereits Stand der Technik ist (vergleiche z. B. US 5,983,147). Die Videosensorik 4 ist in der Lage zu unterscheiden, ob der Beifahrersitz überhaupt belegt ist, ob sich ein Gegenstand auf dem Beifahrersitz befindet oder ob eine Person dort sitzt oder auch ob ein rückwärts gerichteter Kindersitz auf dem Beifahrersitz installiert ist. Des weiteren kann die Videosensorik 4 die Kopfhöhe einer auf dem Beifahrersitz sich befindenden Person erfassen.

Nicht unterscheiden kann die Videosensorik 4 zwischen einer klein gewachsenen erwachsenen Person und einem 5- 8-jährigen Kind, das auf einem auf dem Beifahrersitz aufgelegten Boostersitz sitzt. Durch die Sitzerhöhung bekommt nämlich das Kind eine Kopfhöhe, die in etwa der Kopfhöhe einer kleineren erwachsenen Person entspricht. Weil bei einer erwachsenen Person der Beifahrerairbag aktiviert bleiben soll, dagegen aber bei einem Kind der Beifahrerairbag deaktiviert werden muß, reicht die Videosensorik 4 nicht aus, um hier eine eindeutige Entscheidung zwischen Aktivierung und Deaktivierung des Beifahrerairbags zu treffen.

Um auch für diesen geschilderten Fall eine eindeutige Entscheidung herbeizuführen, ist im Fußraum vor dem Beifahrersitz 1 ein Fußraumsensor 5, 6 angeordnet. In dem dargestellten Ausführungsbeispiel besteht der Fußraumsensor aus zwei Teilen. Der eine Teil 5 ist auf dem waagerecht verlaufenden Bodenbereich und der andere Teil 6 auf dem geneigten Bodenbereich angeordnet. In der Regel reicht es aber aus, nur auf dem waagerecht verlaufenden Bodenbereich einen Fußraumsensor 5 vorzusehen. Der Fußraumsensor 5, 6 registriert, ob ein oder beide Füße einer auf dem Beifahrersitz 1 sitzenden Person den Boden berühren oder nicht. Als Fußraumsensor eignet sich ein Drucksensor, der einen auf den Boden vor dem Beifahrersitz 1 ausgeübten Druck erfaßt.

Um differenzieren zu können, ob der Druck von den Füßen einer Person oder von irgendeinem anderen Gegenstand ausgeübt wird, der im Fußraum vor dem Beifahrersitz abgelegt ist, sollte der Drucksensor das Druckprofil erkennen können. Eine Druckprofilaufnahme läßt sich dadurch bewerkstelligen, daß der Fußraumsensor aus mehreren Drucksensorelementen gebildet wird. Es gibt verschiedene Drucksensorprinzipien, wie sie z.B. von Drucksensormatten, die in Fahrzeugsitze integriert werden, her bekannt sind. Es gibt Drucksensoren mit druckabhängigen Widerstandselementen oder mit Elementen, die ihre Kapazität in Abhängigkeit vom ausgeübten Druck verändern. Ebenso gibt es Drucksensoren, die auf dem sogenannten Microbendingeffekt beruhen. Dabei sind Glasfasern auf einer gewellten Unterlage aufgebracht. Der Lichtfluß durch diese Glasfasern ändert sich, wenn durch Druck auf die Glasfasern deren Durchbiegung verändert wird.

Die Sensorsignale von Fußraumsensor 5, 6 und von der Videosensorik 4 werden einer Auswerteeinheit 7 zugeführt. Letztendlich steuert die Auswerteeinheit 7 die Aktivierung bzw. Deaktivierung des Beifahrerairbags 3 in Abhängigkeit von den Sensorsignalen.

Das in der Figur 2 dargestellte Ablaufdiagramm verdeutlicht, wie von der Videosensorik 4 und dem Fußraumsensor 5, 6 eindeutig entschieden werden kann, ob auf dem Beifahrersitz ein Kind sitzt, bei dem der Beifahrerairbag zu deaktivieren ist oder nicht. Gemäß den Verfahrensschritten 21 und 22 erfaßt einerseits die Videosensorik 4 die Kopfhöhe einer auf dem Beifahrersitz sich befindenden Person, und der Fußraumsensor 5, 6 ob eine Bodenberührung vor dem Beifahrersitz vorliegt. Im Verfahrensschritt 23 findet eine Schwellwertentscheidung statt. Dabei wird die von der Videosensorik erfaßte Kopfhöhe der Person mit einer Schwelle SH verglichen. Liegt die Kopfhöhe nicht unterhalb einer Schwelle SH, so kann die Auswerteeinheit sicher entscheiden, daß kein Kind auf dem Beifahrersitz 1 sitzt. Die Schwelle SH ist also so groß gewählt, daß Kinder, bei denen der Beifahrerairbag unbedingt deaktiviert werden muß, auch wenn sie auf einem Boostersitz sitzen, diese Kopfhöhe SH nicht überschreiten. Im Verfahrensschritt 24 wird die Information des Fußraumsensors ausgewertet und festgestellt, ob ein Fußabdruck auf dem Boden vor dem Beifahrersitz 1 gegeben ist.

Im Verfahrensschritt 25 wird überprüft, ob gleichzeitig die erste Bedingung, daß die erfaßte Kopfhöhe kleiner als die vorgegebene Schwelle SH ist, und die zweite Bedingung, daß es keinen Fußabdruck auf dem Boden vor dem Beifahrersitz gibt, erfüllt ist. Sind beide Bedingungen erfüllt, so entscheidet die Auswerteeinrichtung 7, daß ein Kind sich auf dem Beifahrersitz 1 befindet. Denn ein auf dem Beifahrersitz sich befindendes Kind, vor allem wenn es noch auf einem Boostersitz sitzt, kommt mit seinen Füßen nicht auf den Boden vor dem Beifahrersitz 1. Das Kind erreicht aber unter Umständen, gerade weil es auf einem Boostersitz sitzt, die Kopfhöhe einer kleineren erwachsenen Person . Ein Erwachsener wird aber in der Regel mit mindestens einem Fuß den Boden vor dem Fahrersitz berühren, auch wenn er nur eine Kopfhöhe aufweist, die unterhalb der Schwelle SH liegt. So wird im Verfahrensschritt 26 ermittelt, ob die Person auf dem Beifahrersitz gleichzeitig die erste Bedingung, daß eine Kopfhöhe kleiner als die vorgegebene Schwelle SH ist, und die zweite Bedingung, daß ein Fußabdruck auf dem Boden vor dem Beifahrersitz gegeben ist, vorliegen. Sind beide Bedingungen erfüllt, so entscheidet die Auswerteeinheit 7, daß sich kein Kind auf dem Beifahrersitz 1 befindet. Für den Fall, daß ein Kind auf dem Beifahrersitz 1 erkannt worden ist, gibt die Auswerteeinheit 7 im Verfahrensschritt 27 ein Steuersignal ab zur Deaktivierung des Beifahrerairbags 3.

## Patentansprüche

1. Verfahren zur Sitzbelegungserkennung mittels einer Videosensorik (4), welche die Kopfhöhe einer auf dem Beifahrersitz (1) eines Fahrzeugs befindlichen Person erfaßt, **dadurch gekennzeichnet, daß** mittels eines Fußraumsensors (5, 6) ermittelt wird, ob eine Person mit einem oder beiden Füßen den Boden vor dem Beifahrersitz (1) berührt, und daß die Person auf dem Beifahrersitz (1) als Kind eingestuft wird, bei dem ein Beifahrerairbag (3) zu deaktivieren ist, wenn die Videosensorik (4) eine unterhalb einer vorgegebenen Schwelle (SH) liegende Kopfhöhe registriert und gleichzeitig der Fußraumsensor (5, 6) keine Fußberührung auf dem Boden vor dem Beifahrersitz (1) erkennt.

2. Vorrichtung zur Sitzbelegungserkennung, welche eine Videosensorik (4) aufweist, welche die Kopfhöhe einer auf dem Beifahrersitz (1) eines Fahrzeugs befindlichen Person erfaßt, **dadurch gekennzeichnet, daß** ein Fußraumsensor (5, 6) vorhanden ist, der erfaßt, ob eine Person mit einem oder beiden Füßen den Boden vor dem Beifahrersitz (1) berührt, und daß eine Auswerteeinheit (7) die Person auf dem Beifahrersitz (1) als Kind einstuft, bei dem sie eine Deaktivierung eines vorhandenen Beifahrerairbags (3) veranlaßt, wenn die Videosensorik (4) eine unterhalb einer vorgegebenen Schwelle (SH) liegende Kopfhöhe registriert und gleichzeitig der Fußraumsensor (5, 6) keine Fußberührung des Bodens vor dem Beifahrersitz (1) erkennt.

3. Vorrichtung nach Anspruch 2, **dadurch gekennzeichnet, daß** der Fußraumsensor (5, 6) ein Drucksensor ist, der einen auf dem Boden vor dem Beifahrersitz ausgeübten Druck erfaßt.

4. Vorrichtung nach Anspruch 2, **dadurch gekennzeichnet, daß** der Fußraumsensor (5, 6) ein Drucksensor ist, der bei einem auf dem Boden vor dem Beifahrersitz (1) ausgeübten Druck das Profil des den Druck ausübenden Gegenstandes erfaßt.

5. Vorrichtung nach Anspruch 4, **dadurch gekennzeichnet, daß** der Fußraumsensor (5, 6) aus mehreren Drucksensorelementen besteht.

## Claims

1. Method for detecting seat occupancy using a video sensor system (4) which registers the head height of a person sitting on the passenger seat (1) of a vehicle, **characterized in that** a footwell sensor (5, 6) is used to determine whether one or both feet of a person are touching the floor in front of the passenger seat (1), and **in that** the person on the passenger seat (1) is classed as a child, in which case a passenger airbag (3) is to be deactivated, when the video sensor system (4) registers a head height which is below a predefined threshold (SH) and at the same time the footwell sensor (5, 6) does not detect feet touching the floor in front of the passenger seat (1).

2. Apparatus for detecting seat occupancy which has a video sensor system (4) which registers the head height of a person sitting on the passenger seat (1) of a vehicle, **characterized in that** there is a footwell sensor (5, 6) which registers whether one or both feet of a person are touching the floor in front of the passenger seat (1), and **in that** an evaluation unit (7) classes the person on the passenger seat (1) as a child, in which case said evaluation unit orders deactivation of an existing passenger airbag (3), when the video sensor system (4) registers a head height which is below a predefined threshold (SH) and at the same time the footwell sensor (5, 6) does not detect feet touching the floor in front of the passenger seat (1).

3. Apparatus according to Claim 2, **characterized in that** the footwell sensor (5, 6) is a pressure sensor which registers pressure exerted on the floor in front of the passenger seat.

4. Apparatus according to Claim 2, **characterized in that** the footwell sensor (5, 6) is a pressure sensor which registers the shape of the object exerting the pressure when pressure is exerted on the floor in front of the passenger seat (1).

5. Apparatus according to Claim 4, **characterized in that** the footwell sensor (5, 6) comprises a plurality of pressure sensor elements.

## Revendications

1. Procédé pour détecter l'occupation d'un siège à l'aide d'une sensorique vidéo (4) qui capte la hauteur de tête d'une personne placée sur le siège de passager (1) d'un véhicule,
**caractérisé en ce qu'**
à l'aide d'un capteur d'espace des pieds (5, 6), on détermine si une personne touche le plancher devant le siège de passager (1) avec un pied ou avec les deux pieds, et la personne placée sur le siège de passager (1) est classée dans la catégorie enfant, auquel cas un coussin gonflable passager (3) doit être désactivé lorsque la sensorique vidéo (4) enregistre une hauteur de tête située au-dessous d'un seuil prédéterminé (SH) et qu'en même temps, le capteur d'espace des pieds (5, 6) ne reconnaît aucun contact des pieds sur le plancher devant le siège de passager (1).

2. Dispositif pour détecter l'occupation d'un siège, qui présente une sensorique vidéo (4) qui capte la hauteur de tête d'une personne placée sur le siège de passager (1) d'un véhicule,
**caractérisé en ce qu'**
un capteur d'espace des pieds (5, 6) détecte si une personne touche le plancher devant le siège de passager (1) avec un pied ou avec les deux pieds, et une unité d'exploitation (7) classe la personne placée sur le siège de passager (1) dans la catégorie enfant, auquel cas elle provoque une désactivation d'un coussin gonflable passager (3), lorsque la sensorique vidéo enregistre une hauteur de tête située au-dessous d'un seuil prédéterminé (SH) et qu'en même temps, le capteur d'espace des pieds (5, 6) ne reconnaît aucun contact des pieds sur le plancher devant le siège de passager (1).

3. Dispositif selon la revendication 2,
**caractérisé en ce que**
le capteur d'espace des pieds (5, 6) est un capteur de pression qui capte une pression exercée sur le plancher devant le siège de passager.

4. Dispositif selon la revendication 2,
**caractérisé en ce que**
le capteur d'espace des pieds (5, 6) est un capteur de pression qui, en présence d'une pression exercée sur le plancher devant le siège de passager (1), capte le profil de l'objet qui exerce la pression.

5. Dispositif selon la revendication 4,
**caractérisé en ce que**
le capteur d'espace des pieds (5, 6) est composé de plusieurs éléments formant capteurs de pression.
